# EUROPÄISCHE PATENTSCHRIFT

(11) **EP 2 000 698 B1**
(45) Veröffentlichungstag und Bekanntmachung des Hinweises auf die Patenterteilung: **16.05.2012**
(21) Anmeldenummer: 08005263.2
(22) Anmeldetag: 20.03.2008
(51) Int. Cl.: F16F 15/134, F16F 15/131

(54) **Torsionsschwingungsdämpfer**
Torsion vibration damper
Amortisseur de vibrations de torsion

(30) Priorität: 06.06.2007 DE 102007026429
(43) Veröffentlichungstag der Anmeldung: 10.12.2008
(73) Patentinhaber: ZF Friedrichshafen AG, 88038 Friedrichshafen (DE)
(72) Erfinder: Orlamünder, Andreas, 97453 Schonungen (DE)

(56) Entgegenhaltungen:
- EP-A1- 1 566 566
- EP-A2- 1 953 411
- WO-A1-2006/053525

## Beschreibung

Die vorliegende Erfindung betrifft einen Torsionsschwingungsdämpfer, umfassend eine Primärseite und eine gegen die Wirkung einer Dämpferanordnung ausgehend von einer Neutral-Relativdrehlage um eine Drehachse bezüglich der Primärseite drehbare Sekundärseite. Die Dämpferanordnung umfasst eine im Wesentlichen im gesamten Relativdrehwinkelbereich zwischen der Primärseite und der Sekundärseite wirksame erste Dämpfereinheit mit progressiver Dämpferkennlinie und eine zweite Dämpfereinheit mit wenigstens bereichsweise degressiver Dämpferkennlinie, wobei die zweite Dämpfereinheit wahlweise in den Drehmomentübertragungsweg zwischen der Primärseite und der Sekundärseite zuschaltbar und abschaltbar ist und im Zuschaltzustand parallel zur ersten Dämpfereinheit wirkt.

Ein Torsionsschwingungsdämpfer mit einer solchen Dämpferanordnung ist aus der EP 1 566 566 A1 bekannt. Die zweite Dämpfereinheit umfasst bei dieser Dämpferanordnung wenigstens eine bei Relativdrehung der Primärseite bezüglich der Sekundärseite in Richtung von der Neutral-Relativdrehlage weg verformbare Tellerfeder. Diese Tellerfeder ist derart eingebaut, dass sie bei Anliegen eines bestimmten Moments umschnappt, und bei Umkehr des Verdrehwinkels durch ein in entgegengesetzter Richtung wirksames Moment wieder in ihre Ausgangsposition zurück schnappt. Hierdurch ergibt sich ein undefiniertes Verhalten der Tellerfeder, die vor dem Umschnappen der ersten Dämpfereinheit entgegen wirkt, nach dem Umschnappen aber keine Wirkung mehr entfaltet.

Bei beispielsweise als Zweimassenschwungräder aufgebauten

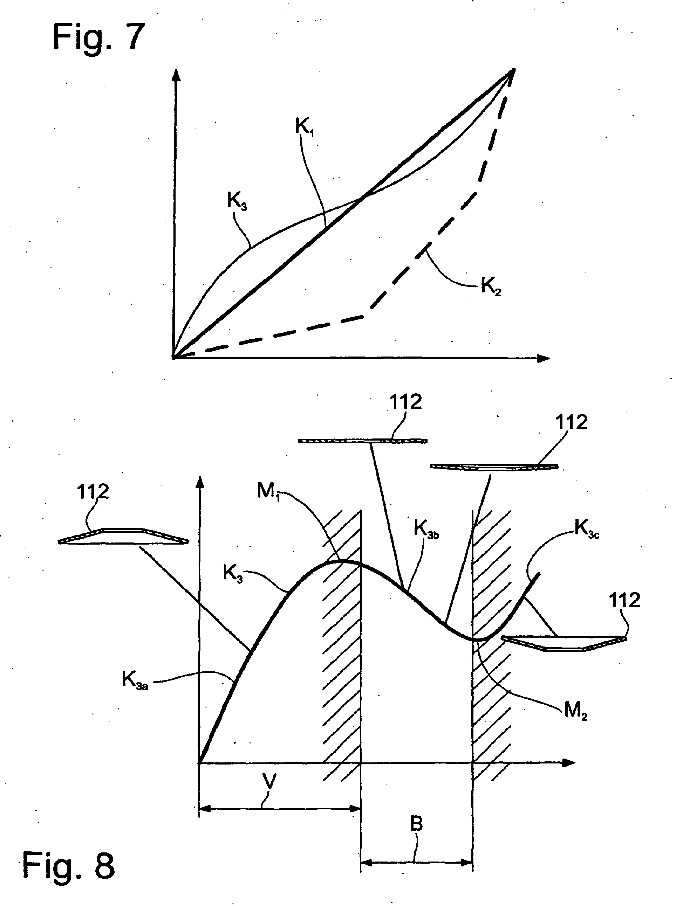

Torsionsschwingungsdämpfern umfasst die Dämpferanordnung im Allgemeinen eine Mehrzahl von unter Vorspannung zwischen der Primärseite und der Sekundärseite eingebauten Schraubendruckfedern. Bei Auslenkung der Primärseite bezüglich der Sekundärseite ausgehend von der im drehmomentenfreien Zustand auch eingenommenen Neutral-Relativdrehlage werden diese Schraubendruckfedern komprimiert und erzeugen somit eine mit zunehmender Auslenkung ansteigende Rückstellkraft. Derartige mit Schraubendruckfedern aufgebaute Dämpferanordnungen weisen also einen ansteigenden Verlauf der Dämpferkennlinie auf, wie er beispielsweise in der Fig. 7 anhand der Kennlinie K₁ veranschaulicht ist. Da im Allgemeinen Schraubendruckfedern einen linearen Kennlinienverlauf aufweisen, steigt die Kennlinie K₁ auch geradlinig an, wobei der linke untere Bereich beispielsweise den bereits mit einer bestimmten Vorspannkraft behafteten Ausgangszustand der Neutral-Relativdrehlage darstellen kann.

Um bei derartigen Torsionsschwingungsdämpfern einen hinsichtlich der Kennlinie gestuften Verlauf erhalten zu können, ist es bekannt, mehrere verschieden aufgebaute bzw. wirksame Schraubendruckfedern zu kombinieren, um eine in der Fig. 7 mit Strichlinie angedeutete Kennlinie K₂ zu erhalten, bei welcher durch das Wirksamwerden bzw. sukzessive Zuschalten weiterer Schraubendruckfedern bei Erreichen bestimmter Grenz-Auslenkungen die Steigung der Kennlinie zunimmt, also die Dämpferanordnung eine mit der Auslenkung zunehmende Steifigkeit aufweist.

Auch ist es möglich, beispielsweise bei Einsatz einer Tellerfeder an Stelle von Schraubendruckfedern, eine ansteigende Kennlinie bereitzuhalten, die in einem Teilbereich mit negativer Krümmung und einem Teilbereich mit positiver Krümmung ausgebildet ist, wie dies anhand der Kennlinie K₃ in der Fig. 7 erkennbar ist.

Um auch vergleichsweise große Drehmomente übertragen zu können, ist es erforderlich, entsprechend stark dimensionierte Federn einzubauen bzw. die Kennlinien so steil zu gestalten, dass im Wesentlichen im gesamten zu erwartenden Drehmomentenbereich der Torsionsschwingungsdämpfer wirksam sein kann. Dies führt jedoch zu einer häufig nicht ausreichenden Entkopplung zwischen der Primärseite und der Sekundärseite, die allgemein eine geringere Steifigkeit, also eine flachere Kennlinie, erfordert. Dies bedeutet, dass bei einem Aufbau eines derartigen Torsionsschwingungsdämpfers ein Kompromiss geschlossen werden muss zwischen der erreichbaren Entkopplungsgüte einerseits und den im Wirkungsbereich des Torsionsschwingungsdämpfers übertragbaren Drehmomenten andererseits.

Es ist die Aufgabe der vorliegenden Erfindung, einen Torsionsschwingungsdämpfer vorzusehen, welcher bei großem Wirkungsbereich hinsichtlich der übertragbaren Drehmomente eine verbesserte Entkopplungsgüte bei exakt definiertem Entkopplungsverhalten bereitstellt.

Erfindungsgemäß wird diese Aufgabe gelöst durch einen Torsionsschwingungsdämpfer, umfassend eine Primärseite und eine gegen die Wirkung einer Dämpferanordnung ausgehend von einer Neutral-Relativdrehlage um eine Drehachse bezüglich der Primärseite drehbare Sekundärseite, wobei die Dämpferanordnung umfasst:
- eine im Wesentlichen im gesamten Relativdrehwinkelbereich zwischen der Primärseite und der Sekundärseite wirksame erste Dämpfereinheit mit progressiver Dämpferkennlinie,
- eine zweite Dämpfereinheit mit wenigstens bereichsweise degressiver Dämpferkennlinie, wobei die zweite Dämpfereinheit wahlweise in den Drehmomentübertragungsweg zwischen der Primärseite und der Sekundärseite zuschaltbar und abschaltbar ist und im Zuschaltzustand parallel zur ersten Dämpfereinheit wirkt.

Der degressive Kennlinienverlauf der zweiten Dämpfereinheit kann beispielsweise dadurch erhalten werden, dass diese wenigstens eine bei Relativdrehung der Primärseite bezüglich der Sekundärseite in Richtung von der Neutral-Relativdrehlage weg verformbare Tellerfeder umfasst.

Um den degressiven Bereich der an sich bekannten Federkennlinie einer Tellerfeder in einfacher Weise nutzen zu können, wird vorgeschlagen, dass die zweite Dämpfereinheit wenigstens eine Tellerfederbaugruppe mit einem wenigstens eine Tellerfeder belastenden ersten Teil und die wenigstens eine Tellerfeder belastenden zweiten Teil umfasst, wobei die wenigstens eine Tellerfeder an dem ersten Teil oder dem zweiten Teil vorgespannt gehalten ist, wobei weiterhin vorgesehen ist, dass die wenigstens eine Tellerfeder an dem einen Teil von erstem Teil und zweitem Teil derart vorgespannt gehalten ist, dass eine ausgehend von dem Vorspannzustand weitergehende Belastung der wenigstens einen Tellerfeder zu einer verminderten Reaktionskraft der wenigstens einen Tellerfeder führt.

Bei dem erfindungsgemäß aufgebauten Torsionsschwingungsdämpfer wird es möglich, durch die wahlweise Zukopplung bzw. Abkopplung der zweiten Dämpfereinheit, welche eine degressive Kennlinie aufweist, durch die Überlagerung mit dem progressiven Kennlinienverlauf der ersten Dämpfereinheit den Torsionsschwingungsdämpfer in einem vergleichsweise flachen Gesamt-Kennlinienbereich arbeiten zu lassen. Dies bedeutet, durch die Überlagerung der beiden Charakteristiken der parallel wirksamen Dämpfereinheiten wird eine vergleichsweise geringe Gesamtsteifigkeit, also eine nur vergleichsweise sanft ansteigende Gesamt-Kennlinie erzeugt, die in durch die wahlweise Zukoppelbarkeit bzw. Abkoppelbarkeit der zweiten Dämpfereinheit auswählbaren Drehmomentenbereichen zu einer erheblich verbesserten Entkopplung zwischen der Primärseite und der Sekundärseite führt.

Es sei hier darauf hingewiesen, dass, wie vorangehend bereits dargelegt, im Sinne der vorliegenden Erfindung ein progressiver Verlauf einer Dämpferkennlinie charakterisiert ist dadurch, dass mit zunehmender Belastung einer jeweiligen Dämpfereinheit die durch die Dämpfereinheit generierte Reaktionskraft zunimmt, beispielsweise linear zunimmt, wie anhand der Kennlinie K₁ für das Beispiel einer Schraubendruckfeder oder anhand der Kennlinie K₂ im Falle mehrerer gestuft wirksam werdender Schraubendruckfedern veranschaulicht. Ein progressiver Kennlinienverlauf bedeutet allgemein also einen über dem Belastungsweg bzw. Kompressionsweg ansteigenden Kennlinienverlauf, wobei dieser selbstverständlich auch progressiv ansteigend ausgebildet sein kann, also mit zunehmender Steigung verlaufen kann, oder degressiv ansteigen kann, also mit abnehmender Steigung ansteigen kann. Ein degressiver Verlauf einer Dämpferkennlinie ist charakterisiert dadurch, dass mit zunehmender Belastung, also bei Verdrehung der Primärseite bezüglich der Sekundärseite weiter in Richtung von der Neutral-Relativdrehlage weg, die in einer jeweiligen Dämpfereinheit generierte Reaktionskraft abnimmt, beispielsweise linear oder mit gekrümmtem Verlauf abnimmt. Degressiv bedeutet im Sinne der vorliegenden Erfindung allgemein also einen abfallenden Verlauf einer Dämpferkennlinie über dem Belastungsweg bzw. Kompressionsweg, wobei auch hier ein progressiver Abfall vorhanden sein kann, also ein Abfallen mit zunehmender Steigung bzw. ein degressiver Abfall vorgesehen sein kann, also ein Abfall mit abnehmender Steigung. Die vorangehend bereits angesprochene Steifigkeit einer Dämpfereinheit bzw. der Dämpferanordnung charakterisiert im Wesentlichen die Steigung einer jeweiligen betrachteten Kennlinie. Eine vergleichsweise große Steigung bedeutet im Sinne der vorliegenden Erfindung also eine hohe Steifigkeit, während ein vergleichsweise flacher Kennlinienverlauf im Sinne der vorliegenden Erfindung als geringe Steifigkeit zu interpretieren ist.

Zurückkommend auf die wenigstens eine Tellerfederbaugruppe ist festzustellen, dass diese wenigstens zwei vorgespannt gehaltene Tellerfedern umfassen kann.

Der Aufbau der wenigstens einen Tellerfederbaugruppe kann beispielsweise derart sein, dass das erste Teil die wenigstens eine Tellerfeder radial außen belastet und das zweite Teil die wenigstens eine Tellerfeder radial innen belastet. Es sei hier darauf hingewiesen, dass radial außen bzw. radial innen Bezug nimmt auf die allgemein ringartige Ausgestaltung einer derartigen Tellerfeder mit einem einem Ringzentrum näher liegenden radial inneren Bereich und einem vom Ringzentrum weiter entfernt liegenden radial äußeren Bereich.

Bei einer alternativen Ausgestaltung kann der Aufbau derart sein, dass das erste Teil wenigstens eine erste Tellerfeder radial außen belastet, dass das zweite Teil wenigstens eine zweite Tellerfeder radial außen belastet und dass die wenigstens eine erste Tellerfeder und die wenigstens eine zweite Tellerfeder radial innen bezüglich einander abgestützt sind.

Da Tellerfedern allgemein im Vergleich zu Schraubenfedern einen deutlich geringeren Federweg ermöglichen, insbesondere dann, wenn nur der degressive Bereich der Kennlinie einer Tellerfeder genutzt werden soll, wird zum Bereitstellen eines ausreichend großen Kompressionsvolumens der zweiten Dämpfereinheit vorgeschlagen, dass die zweite Dämpfereinheit wenigstens eine Gruppe von seriell wirkenden Tellerfederbaugruppen umfasst.

Die wahlweise Zuschaltung bzw. Abschaltung der zweiten Dämpfereinheit in den Drehmomentübertragungsweg bzw. aus dem Drehmomentübertragungsweg kann dadurch erhalten werden, dass die zweite Dämpfereinheit einen mit einer Seite von Primärseite und Sekundärseite im Wesentlichen drehfest gekoppelten ersten Ankopplungsbereich aufweist und einen mit der anderen Seite von Primärseite und Sekundärseite wahlweise in Drehmomentübertragungskopplung bringbaren zweiten Ankopplungsbereich umfasst.

Dabei kann weiter vorgesehen sein, dass dem zweiten Ankopplungsbereich eine erste Klemmanordnung an der anderen Seite von Primärseite und Sekundärseite zugeordnet ist, wobei durch die erste Klemmanordnung die Drehmomentübertragungskopplung herstellbar und aufhebbar ist. Diese erste Klemmanordnung kann also nach Art einer Reibungskupplung wirksam sein, um durch Reibkraftschluss eine Drehmomentübertragung zwischen der Primärseite und der Sekundärseite auch über die zweite Dämpfereinheit zu gewährleisten.

Der Aufbau kann vorzugsweise derart sein, dass die erste Klemmanordnung wenigstens ein durch Druckfluidbeaufschlagung zur Herstellung/Aufhebung der Drehmomentübertragungskopplung verlagerbares erstes Klemmorgan umfasst.

Um zusätzlich zur Abfuhr von in einem Antriebsstrang bzw. einem Torsionsschwingungsdämpfer auftretenden Drehschwingungen beitragen zu können, wird vorgeschlagen, dass eine wahlweise aktivierbare und deaktivierbare Reibeinrichtung zur Erzeugung einer Reibwirkung zwischen der Primärseite und der Sekundärseite vorgesehen ist.

Die wahlweise Aktivierung bzw. Deaktivierung der Reibeinrichtung kann dadurch erfolgen, dass der Reibeinrichtung eine zweite Klemmanordnung mit wenigstens einem durch Druckfluidbeaufschlagung zur Herstellung/Aufhebung der Reibwirkung verlagerbaren zweiten Klemmorgan zugeordnet ist. Zum Vereinfachen des Aufbaus wird dabei weiter vorgeschlagen, dass die zweite Klemmanordnung an der anderen Seite von Primärseite und Sekundärseite vorgesehen ist.

Zur Zufuhr bzw. Abfuhr von Druckfluid zur Betätigung der verschiedenen Klemmanordnungen wird vorgeschlagen, dass der anderen Seite von Primärseite und Sekundärseite eine Drehdurchführung zur Zufuhr/Abfuhr von Druckfluid zugeordnet ist.

Die vorliegende Erfindung wird nachfolgend mit Bezug auf die beiliegenden Figuren detailliert beschrieben. Es zeigt:
- Fig. 1: eine Längsschnittansicht eines erfindungsgemäß aufgebauten Torsionsschwingungsdämpfers;
- Fig. 2: eine schaltbildartige Prinzipdarstellung des Torsions-schwingungsdämpfers der Fig. 1;
- Fig. 3: in ihren Darstellungen a) und b) jeweils eine Tellerfederbau-gruppe im nicht belasteten bzw. im belasteten Zustand;
- Fig. 4: eine Axialansicht der in Fig. 3 gezeigten Tellerfederb.augruppe;
- Fig. 5: eine Gruppe von Tellerfederbaugruppen in einem nicht belaste-ten Zustand;
- Fig. 6: die Gruppe von Tellerfederbaugruppen der Fig. 5 in belastetem Zustand;
- Fig. 7: ein Weg-Kraft-Diagramm, welches einen progressiven Kennlini-enverlauf einer Dämpfereinheit veranschaulicht;
- Fig. 8: ein Weg-Kraft-Diagramm, welches den Kennlinienverlauf einer Tellerfeder veranschaulicht;
- Fig. 9: ein Weg-Kraft-Diagramm, welches den durch Überlagerung einer progressiven Kennlinie und des degressiven Teils einer Tellerfederkennlinie generierten Verlauf einer Gesamt-Kennlinie veranschaulicht;
- Fig. 10: in ihren Darstellungen a) und b) eine alternative Ausgestaltung einer Tellerfederbaugruppe im nicht belasteten und im belasteten Zustand;
- Fig. 11: eine Abwandlung der in Fig. 10 gezeigten Tellerfederbaugruppe mit zwei stapelartig angeordneten Tellerfedern;
- Fig. 12: eine Gruppe von in Fig. 10 gezeigten Tellerfederbaugruppen;
- Fig. 13: eine der Fig. 1. entsprechende Darstellung einer alternativen Ausgestaltungsart eines Torsionsschwingungsdämpfers;
- Fig. 14: ein der Fig. 9 entsprechendes Diagramm mit im Wesentlichen permanent weckender zweiter Dämpfereinheit.

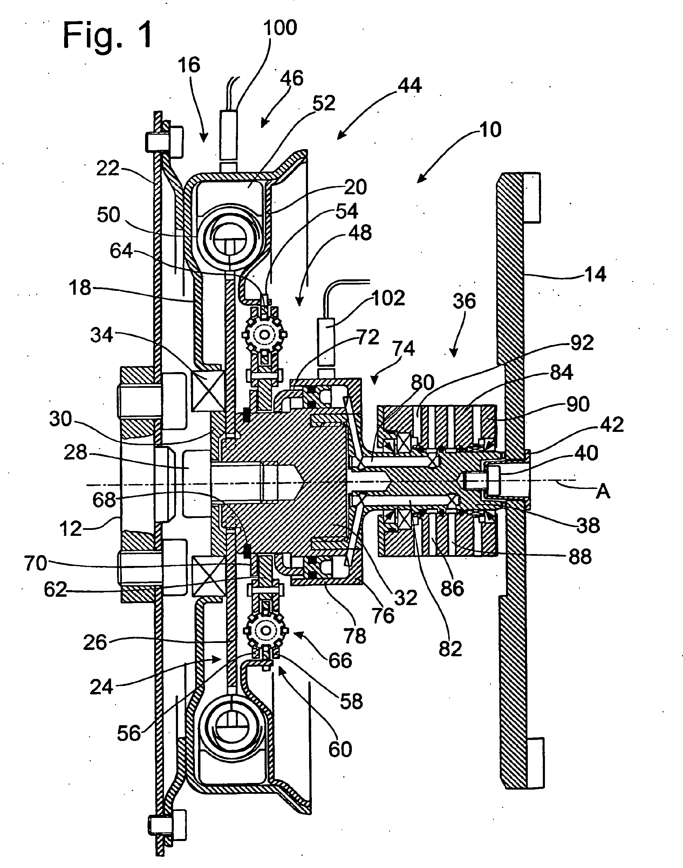

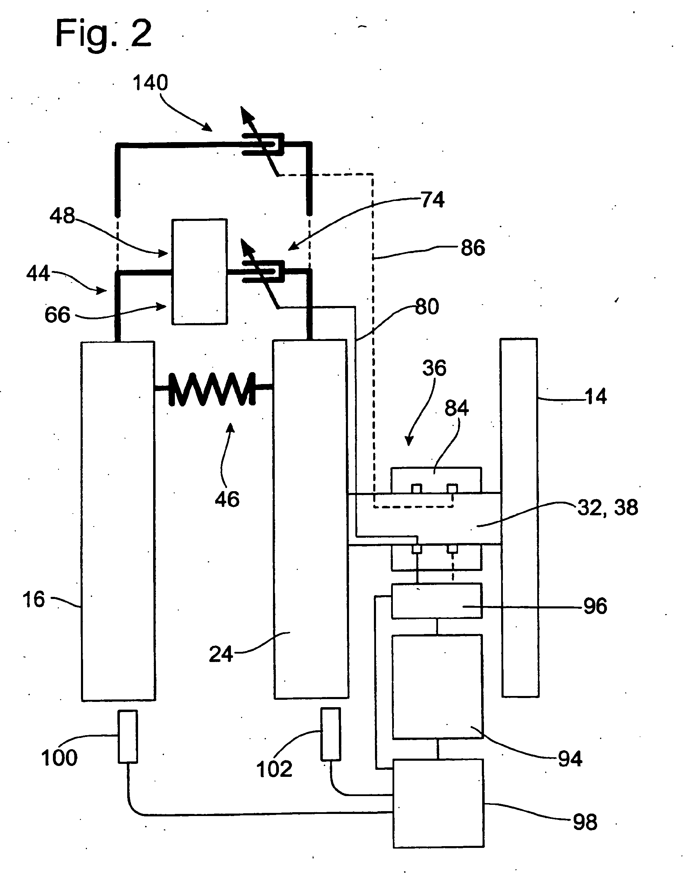

Die Fig. 1 und 2 zeigen in Längsschnittdarstellung bzw. in schaltbildartiger Darstellung den Aufbau eines allgemein mit 10 bezeichneten Torsionsschwingungsdämpfers für den Antriebsstrang eines Fahrzeugs. Dieser Torsionsschwingungsdämpfer 10 dient beispielsweise dazu, ein Drehmoment zwischen einem Antriebsorgan 12, beispielsweise einer Kurbelwelle einer Brennkraftmaschine, und einer Schwungmasse 14 einer Reibungskupplung oder dergleichen zu übertragen. Der Torsionsschwingungsdämpfer 10 umfasst eine Primärseite 16 mit zwei beispielsweise aus Blechmaterial geformten Deckscheibenelementen 18, 20. Diese sind radial außen beispielsweise durch Verschweißen fest miteinander verbunden. Das Deckscheibenelement 18 und somit die Primärseite 16 kann über eine Mitnehmerscheibe 22, die insbesondere axial flexibel ausgebildet sein kann, mit dem Antriebsorgan 12 zur gemeinsamen Drehung um eine Drehachse A fest verbunden sein.

Eine Sekundärseite 24 des Torsionsschwingungsdämpfers 10 umfasst ein Zentralscheibenelement 26, das radial außen zwischen die beiden Deckscheibenelemente 18, 20 eingreift. Radial innen ist das Zentralscheibenelement 26 unter Einsatz einer Klemmschraube 28 und einer Klemmscheibe 30 mit einem ersten Rotorteil 32 der Sekundärseite 24 drehfest gekoppelt. Über ein Lager 34 ist das Deckscheibenelement 18 der Primärseite 16 radial und erforderlichenfalls auch axial bezüglich des ersten Rotorteils 32 drehbar gelagert.

Mit dem ersten Rotorteil 32 ist weiterhin ein zweites Rotorteil 38 einer nachfolgend noch erläuterten Drehdurchführung 36 drehfest gekoppelt. Mit diesem zweiten Rotorteil 38 ist über eine Spannschraube 40 und ein Spannelement 42 die Schwungmasse 14 drehfest verbunden. Insofern erkennt man also, dass auch zwischen dem Zentralscheibenelement 26 und der Schwungmasse 14 eine im Wesentlichen drehfeste Verbindung besteht.

Zur Drehmomentübertragung zwischen der Primärseite 16 und der Sekundärseite 24 ist eine allgemein mit 44 bezeichnete Dämpferanordnung vorgesehen. Diese umfasst zwei Dämpfereinheiten 46, 48. Die Dämpfereinheit 46 ist beispielsweise mit einer Mehrzahl von in Umfangsrichtung aufeinander folgend angeordneten und ggf. auch radial ineinander geschachtelten Schraubenfedern bzw. Schraubendruckfedern 50 ausgebildet. Diese stützen sich in Umfangsrichtung in an sich bekannter Weise an jeweiligen Abstützbereichen der Deckscheibenelemente 18, 20 bzw. Zentralscheibenelements 26 ab, sind also beispielsweise in so genannten Federfenstern unter Vorspannung gehalten. Eine Relativdrehung der Deckscheibenelemente 18, 20 bezüglich des Zentralscheibenelements 24 ausgehend von einer Neutral-Relativdrehlage erfolgt also gegen die von den Schraubenfedern 50 generierte Rückstellkraft. Diese Rückstellkraft ist progressiv, steigt also mit zunehmender Drehauslenkung der Primärseite 16 bezüglich der Sekundärseite 24 an, beispielsweise in linearer bzw. gestuft linearer Weise, wie anhand der Kennlinien K₁ bzw. K₂ bereits mit Bezug auf die Fig. 7 erläutert. Dabei können die Schraubenfedern 50 sich nach radial außen über so genannte Gleitschuhe 52 abstützen, um eine Minimierung der Reibkräfte zu erlangen.

Die zweite Dämpfereinheit 48 umfasst einen nach Art eines Zentralscheibenelements 64 aufgebauten ersten Ankopplungsbereich 54. dieser ist durch Verzahnungseingriff mit dem Deckscheibenelement 20 und somit der Primärseite 16 des Torsionsschwingungsdämpfers 10 im Wesentlichen drehfest gekoppelt und ist somit massenmäßig auch der Primärseite 16 zuzurechnen. Ein mit zwei Deckscheibenelementen 56, 58 aufgebauter zweiter Ankopplungsbereich 60 der zweiten Dämpfereinheit 48 umfasst radial innen eine nachfolgend noch näher erläuterte Klemmscheibe 62. Diese kann mit den beiden Deckscheibenelementen 56, 58 durch Vernietung oder dergleichen fest verbunden sein und umgibt das erste Rotorteil 32 ringartig, ist also grundsätzlich bezüglich diesem auch um die Drehachse A drehbar.

Die Drehmomentübertragung zwischen dem Zentralscheibenelement 64 des ersten Ankopplungsbereichs 54 und dem zweiten Ankopplungsbereich 60, also den beiden Deckscheibenelementen 56, 58 desselben, erfolgt über eine Mehrzahl von nachfolgend noch detaillierter erläuterten Tellerfederbaugruppen 66. Diese erzeugen im Drehmomentübertragungsfalle ebenfalls eine Rückstellkraft.

Um eine Drehmomentübertragungkopplung zwischen dem zweiten Ankopplungsbereich 60, also der Klemmscheibe 62 desselben, und der Sekundärseite 24 zu erzeugen, ist mit dem ersten Rotorteil 32 in axialer Richtung durch einen Sicherungsring 68 abgestützt ein Widerlagerring 70 verbunden. Dieser kann beispielsweise auch mit dem ersten Rotorteil 32 drehfest gekoppelt sein, beispielsweise durch Verzahnungseingriff. An der anderen axialen Seite der Klemmscheibe 62 ist ein Klemmring 72 einer allgemein mit 74 bezeichneten ersten Klemmanordnung vorgesehen. Diese erste Klemmanordnung 74 umfasst beispielsweise integral mit dem ersten Rotorteil 32 ausgebildet einen Ringzylinder 76, in welchem in Richtung der Drehachse A verschiebbar ein Ringkolben 78 aufgenommen ist. Durch Verschiebung des Ringkolbens 78 in Richtung auf die Klemmscheibe 62 zu, verschiebt der Ringkolben 78 den Klemmring 72, bis dieser die Klemmscheibe 62 gegen den Widerlagerring 70 presst und somit durch Reibkraftschluss eine Drehmomentübertragungskopplung zwischen der Sekundärseite 24 und dem zweiten Ankopplungsbereich 60 der zweiten Dämpfereinheit 48 generiert ist. In diesem Zustand der Drehmomentübertragungskopplung wirkt die zweite Dämpfereinheit 48 parallel zur ersten Dämpfereinheit 46.

Um die vorangehend bereits dargelegte Bewegung des Ringkolbens 78 zu erlangen, kann über die Drehdurchführung 36 dem Ringzylinder 76 Druckfluid, beispielsweise Druckluft oder Drucköl, zugeführt bzw. von diesem abgeführt werden. Zu diesem Zwecke sind in dem zweiten Rotorteil 38, welches auch den rotierenden Teil der Drehdurchführung 36 bildet, zu dem Ringzylinder 76 führende Fuidkanäle 80, 82 ausgebildet. In einem radial äußeren, nicht rotierenden Teil 84 der Drehdurchführung 36 sind in Zuordnung zu den Kanälen 80, 82 weitere Kanäle 86, 88 vorgesehen, über welche eine Zufuhr bzw. Abfuhr von Druckfluid erfolgen kann. Über beidseits der Kanäle 86, 88 angeordnete Leckagekanäle 90, 92 kann das über verschiedene Dichtungsanordnungen hinweg gelangte Druckfluid zu einem Reservoir zurückgeleitet werden. Es sei hier darauf hingewiesen, dass eine Druckfluidquelle, beispielsweise ein Kompressor oder eine Ölpumpe, bzw. ein das Druckffluid auch aufnehmendes Reservoir in der Fig. 1 nicht dargestellt sind. Diese Druckfluidquelle ist schematisch in der Fig. 2 erkennbar und dort mit 94 bezeichnet. Über eine Ventilanordnung 96, welche die verschiedenen Strömungswege zu und von dem Ringzylinder 76 freigibt bzw. blockiert, kann das Druckfluid in den Bereich der Sekundärseite 24 geleitet bzw. von dort abgezogen werden. Man erkennt in Fig. 2 weiter eine Ansteuervorrichtung 98, welche die Druckfluidquelle 94 und auch die Ventilanordnung 96 ansteuert, um wahlweise durch Druckfluidzufuhr bzw.

Druckfluidabfuhr den Ringkolben 78 zu verschieben und somit die Drehmomentübertragungskopplung zwischen dem zweiten Ankopplungsbereich 60 und der Sekundärseite 24 herzustellen bzw. aufzuheben. Zu diesem Zwecke empfängt die Ansteuervorrichtung 98 unter anderem Eingangssignale von Drehfühlern 100 bzw. 102, welche Information über die Drehlage der Primärseite 16 und der Sekundärseite 24 liefern. Aus dieser Information kann die Ansteuervorrichtung 98 unter anderem eine Information über die Relativdrehlage bzw. auch die Relativdrehgeschwindigkeit der Primärseite 16 bezüglich der Sekundärseite 24 ermitteln und beruhend auf dieser Information dann die Ventilanordnung 96 bzw. die Druckfluidquelle 94 ansteuern, um die zweite Dämpfereinheit 48 zu aktivieren bzw. zu deaktivieren.

Durch Zufuhr bzw. Abfuhr von Druckfluid kann also unter entsprechender Verschiebung des Ringkolbens 78 eine Ankopplung des zweiten Ankopplungsbereichs 60 an die Sekundärseite 24 erfolgen, so dass wahlweise die zweite Dämpfereinheit 48 in den Drehmomentübertragungsweg zwischen der Primärseite 16 und der Sekundärseite 24 eingeschaltet bzw. aus diesem Drehmomentübertragungsweg abgeschaltet werden kann. Im eingeschalteten Zustand wirkt, wie bereits dargelegt, die zweite Dämpfereinheit 48 parallel zu der ersten Dämpfereinheit 46.

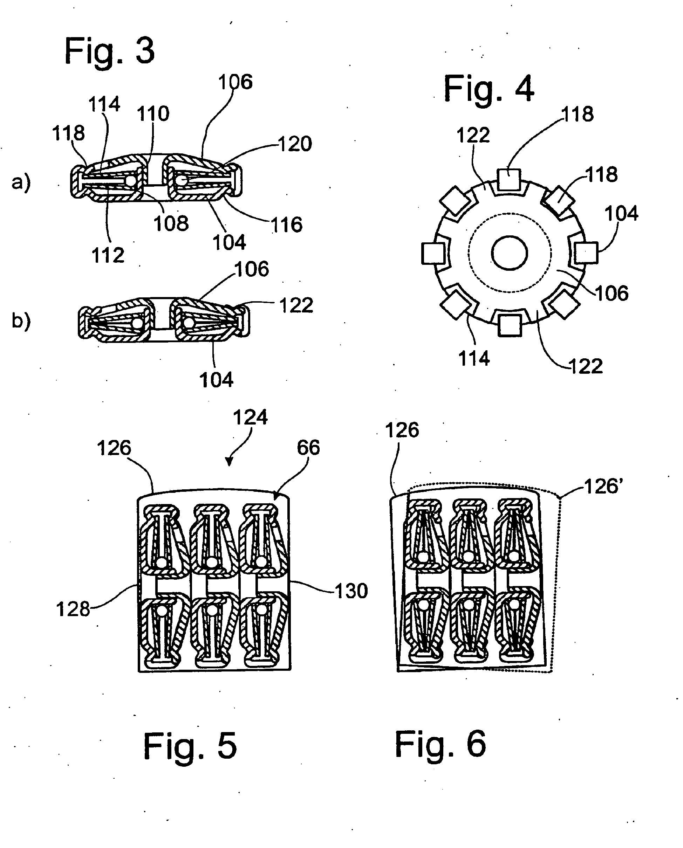

Die Fig. 3 und 4 zeigen den Aufbau einer Tellerfederbaugruppe 66, wie sie vorangehend mit Bezug auf die Fig. 1 bereits angedeutet wurde. Die in Fig. 3a) im nicht belasteten Zustand dargestellte Tellerfederbaugruppe 66 umfasst zwei ringartige Teile 104, 106. Die beiden Teile 104, 106 weisen radial innen jeweilige ineinander eingreifende zylindrische Ansätze 108, 110 auf, welche auch eine definierte axiale Führung bzw. Verschiebbarkeit der beiden Teile 104, 106 bezüglich einander gewährleisten.

Zwischen den beiden Teilen 104, 106 sind zwei Tellerfedern 112, 114 angeordnet. Die Tellerfeder 112 ist radial außen an einem Abstützbereich 116 des ersten Teils 104 abgestützt. Die Tellerfeder 114 ist radial außen an die beiden Tellerfedern 112, 114 radial außen übergreifenden Vorspannhalteabschnitten 118 des ersten Teils 104 axial abgestützt. Radial innen liegt zwischen den beiden Tellerfedern 112, 114 ein ringartiges Zwischenelement 120, das aufgrund der Tatsache, dass die beiden Tellerfedern 112, 114 vorgespannt am ersten Teil 104 gehalten sind, von beiden Tellerfedern 112, 114 belastet wird. Zwischen die Vorspannhalteabschnitte 118 des ersten Teils 104 greifen nach radial außen sich erstreckende Abstützabschnitte 122 des zweiten Teils 106 ein. Mit diesen Abstützabschnitten 122 belastet das zweite Teil 106 die Tellerfeder 114 radial außen. Werden die beiden Teile 104, 106 ausgehend von dem in Fig. 3a) gezeigten unbelasteten Zustand, in welchem gleichwohl die beiden Tellerfedern 112, 114 vorgespannt gehalten sind, einander angenähert, also aufeinander zu geschoben, so werden radial außen die beiden Tellerfedern 112, 114 unter weitergehender Spannung aufeinander zu bewegt, so dass die Tellerfeder 114 mit ihrem radial äußeren Bereich von den Vorspannhalteabschnitten 118 abhebt und nur noch durch die Abstützabschnitte 122 des zweiten Teils 106 belastet ist. Dieser Zustand ist in Fig. 3b) gezeigt.

Die Fig. 5 und 6 zeigen eine Gruppe 124 der vorangehend erläuterten Tellerfederbaugruppen 66, die in jeweiligen Federfenstern 126 des Zentralscheibenelements 64 bzw. der Deckscheibenelemente 56, 58 des ersten Ankopplungsbereichs 54 bzw. des zweiten Ankopplungsbereichs 60 in an sich bekannter Art und Weise vorgesehen sind. In derartigen Federfenstern 126 sind bei herkömmlich aufgebauten Torsionsschwingungsdämpfern die in Umfangsrichtung sich erstreckenden Schraubendruckfedern angeordnet. Bei der zweiten Dämpfereinheit 48 sind in diesen Federfenstern 126, von welchen selbstverständlich in Umfangsrichtung um die Drehachse A aufeinander folgend mehrere vorgesehen sind bzw. sein können, jeweils die Gruppen 124 von Tellerfederbaugruppen 66 vorgesehen. Im dargestellten Beispiel umfassen diese Gruppen 124 beispielsweise drei Tellerfederbaugruppen 66. Diese Tellerfederbaugruppen 66 können in den Federfenstern 126 in einem zusätzlich zu der vorangehend bereits angesprochenen Vorspannung der Tellerfedern 112, 114 noch weiter vorgespannten Zustand aufgenommen sein, so dass sie sich auch im nicht. belasteten Zustand an jeweiligen Steuerkanten 128, 130 der Federfenster 126 abstützen.

Ist die zweite Dämpfereinheit 48 in den Drehmomentübertragungsweg eingeschaltet, so führt eine Relativdrehung der Primärseite 16 bezüglich der Sekundärseite 24 dazu, dass die Federfenster im Zentralscheibenelement 64 bzw. den Deckscheibenelementen 56, 58 sich in Umfangsrichtung bezüglich einander verlagern. In Fig. 6 ist dies anhand des mit durchgezogener Linie dargestellten Federfensters 126 des Zentralscheibenelements 64 und des Federfensters 126' beispielsweise des Deckscheibenelements 56 veranschaulicht. Bei dieser Relativverlagerung werden die Tellerfederbaugruppen 66 belastet und die Tellerfedern 112, 114 zusätzlich gespannt, wie dies auch in Fig. 3b) gezeigt ist.

Durch die serielle Schaltung mehrerer Tellerfederbaugruppen 66 bzw. mehrerer Tellerfedern in jeder Tellerfederbaugruppe 66 wird es möglich, einen Gesamtkompressions- bzw. Federweg der zweiten Dämpfereinheit 48 zu erlangen, der deutlich größer ist, als der allgemein sehr begrenzte Federweg einer einzigen Tellerfeder. Weiter kann selbstverständlich durch die Anzahl und die Dimensionierung der Tellerfedern in den einzelnen Tellerfedergruppen 66 bzw. den Gruppen 124 von Tellerfedergruppen 66 ein elementarer Einfluss auf die Rückstellcharakteristik der zweiten Dämpfereinheit 48 genommen werden.

Betrachtet man nun die Fig. 8, so ist dort eine Kennlinie K₃ einer Tellerfeder aufgetragen. Die Kennlinie K₃ gibt also die durch eine Tellerfeder bei deren Belastung generierte Reaktionskraft wieder. Man erkennt, dass zunächst ausgehend von dem in Fig. 8 links dargestellten nicht belasteten und leicht schirmartig vorgeformten Zustand beispielsweise der Tellerfeder 112 bei einer Verformung in Richtung Abflachung zunächst in einem ansteigenden Ast K₃ₐ ein steiler Anstieg der Federreaktionskraft auftritt, und zwar bis ein lokales Maximum M₁ erreicht wird. Es folgt daraufhin ein abfallender, also degressiver Bereich K_{3b}, in welchem die Tellerfeder 112 über ihre vollkommene Abflachung hinausgehend in der den entspannten Zustand entgegengesetzten Richtung verformt wird. Eine weitergehende Verformung führt zu einem lokalen Minimum M₂. Ausgehend von diesem lokalen Minimum M₂ führt dann eine weitergehende Verformung der Tellerfeder 112 zu einem Anstieg in einem Bereich K_{3c} der Kennlinie K₃.

Die vorliegende Erfindung nutzt den degressiven Teil K_{3b} der Kennlinie K₃ einer Tellerfeder und zwar beispielsweise in dem in Fig. 8 kenntlich gemachten Bereich B. Der vor diesem Bereich B liegende Bereich V ist der Vorspannbereich, also derjenige Kompressionsweg, den die Tellerfeder 112 bzw. auch andere Tellerfedern beim Einbau in die jeweiligen Tellerfederbaugruppen 66 erfährt. Im nicht belasteten Zustand befindet sich also eine jeweilige Tellerfeder dann am Angrenzungsbereich der Kennlinienabschnitte K₃ₐ und K_{3b}. Im maximal komprimierten Zustand einer jeweiligen Tellerfederbaugruppe 66 können sich die Tellerfedern dann auf der Kennlinie im Angrenzungsbereich der Abschnitte K_{3b} und K_{3c} befinden. Es ist somit sichergestellt, dass in der zweiten Dämpfereinheit 48 lediglich der degressive, näherungsweise lineare, jedoch leicht geschwungene Abschnitt K_{3b} der Kennlinie genutzt wird.

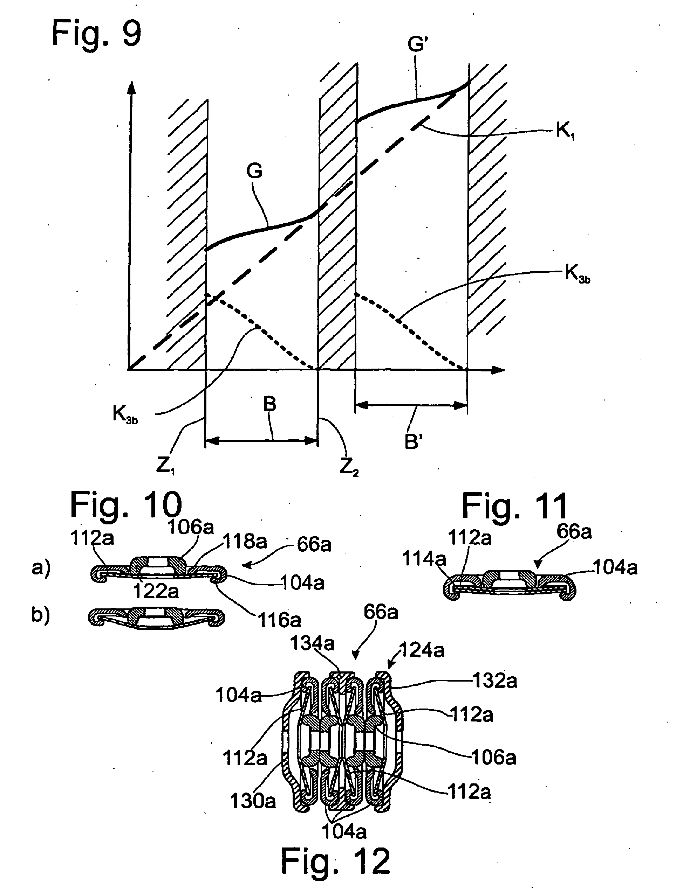

Durch die bei Aktivierung der zweiten Dämpfereinheit 48 vorliegende Parallelschaltung der beiden Dämpfereinheiten 46, 48 wird also eine Überlagerung ihrer beiden Kennlinien generiert, wie sie nachfolgend mit Bezug auf die Fig. 9 erläutert wird. In Fig. 9 erkennt man grundsätzlich den Kennlinienverlauf K₁ anhand der grobgestrichelten Linie, welcher nach rechts hin, also in Richtung von der Neutral-Relativdrehlage weg, progressiv verläuft bzw. linear ansteigt. Je nach dem, in welchem Ausmaß die Primärseite 16 und die Sekundärseite 24 bezüglich einander verdreht sind, wird also durch die Schraubenfeder 50 eine auf der Grundlage dieser Kennlinie K₁ generierte Reaktionskraft erzeugt, durch welche die Primärseite 16 und die Sekundärseite 24 in Richtung zur Neutral-Relativdrehlage zurückbelastet werden. Tritt das System in einen schwingungskritischen Zustand ein, beispielsweise deshalb, weil ein Resonanzbereich durchlaufen wird, kann durch das Zuschalten bzw. Aktivieren der zweiten Dämpfereinheit 48 eine deutlich geringere Steifigkeit des Torsionsschwingungsdämpfers 10 erlangt werden. Man erkennt hierzu in der Fig. 9 wieder den Bereich B. Es sei hier beispielsweise angenommen, dass beim Relativdrehzustand Z₁, welcher aufgrund der Ausgaben der Sensoren 100, 102 erkannt wird, der Druck des Druckfluids im Ringzylinder 76 erhöht wird und somit die erste Klemmanordnung 74 in ihren Einrückzustand gebracht wird. Dies bedeutet, dass bei weiterer Relativdrehung über den Zustand Z₁ hinaus, nicht nur gegen die durch die Kennlinie K₁ definierte Reaktionskraft der ersten Dämpfereinheit 46 gearbeitet werden muss, sondern dass die Primärseite 16 und die Sekundärseite 24 bei weiterer Verdrehung durch eine zusätzliche Kraft belastet werden, nämlich den durch den Abschnitt K_{3b} der Kennlinie K₃ generierten Kraftanteil. Dies führt, wie in Fig. 9 erkennbar, zwischen den beiden durch die Breite des Bereichs B auch definierten Zuständen Z₁ und Z₂ zu einer durch eine dicke durchgezogene Linie definierten Gesamtkennlinie G, die zwischen den Zuständen Z₁ und Z₂ zwar deutlich über der Kennlinie K₁ liegt, jedoch aufgrund des stark degressiven Anteils der Kennlinie K₃ einen wesentlich flacheren Verlauf nimmt. Dieser flachere Verlauf der Gesamtkennlinie G im Bereich B zwischen den Zuständen Z₁ und Z₂ führt bei paralleler Wirksamkeit der zweiten Dämpfereinheit zu einer deutlich verbesserten Entkopplungsqualität zwischen der Primärseite 16 und der Sekundärseite 24.

Wie man aus Fig. 9 weiter erkennt, ist es selbstverständlich möglich, die zweite Dämpfereinheit 48 in verschiedenen Arbeitsbereichen der ersten Dämpfereinheit 46 zuzuschalten. Ist beispielsweise grundsätzlich ein größeres Drehmoment über den Torsionsschwingungsdämpfer 10 zu übertragen, so bedeutet dies, dass die Primärseite 16 und die Sekundärseite 24 vergleichsweise stark bezüglich einander verdreht sein werden. Treten in diesem Zustand dann Drehmomentschwankungen auf, so wird eine Oszillation nicht um die Neutral-Relativdrehlage herum stattfinden, sondern in einem Bereich erfolgen, der vergleichsweise weit von der Neutral-Relativdrehlage entfernt liegt. Um auch in einem derartigen durch die Ausgaben der Sensoren 100, 102 ermittelbaren Zustand die Vorteile der Erfindung nutzen zu können, wird, wie dies die Fig. 9 veranschaulicht, die zweite Dämpfereinheit 48 dann aktiviert, also in den Drehmomentübertragungsweg eingeschaltet, wenn dies angesichts des erfassten Zustands erforderlich ist. Es kann also auch in einem Bereich B', der zu deutlich größeren zu übertragenden Drehmomenten hin verschoben ist, durch Zuschalten der zweiten Dämpfereinheit 48 dann eine Gesamtkennlinie G' erhalten werden, die für eine geeignete Bedämpfung in diesem Drehmomentenbereich sorgt.

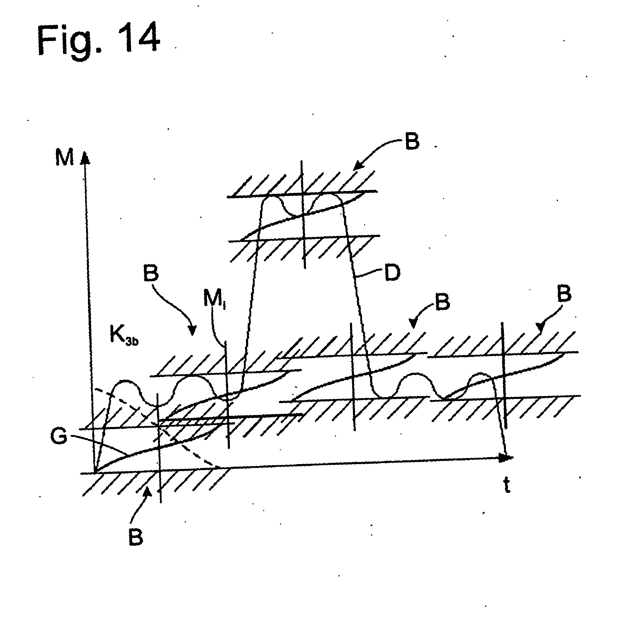

Die Fig. 14 zeigt den zeitlichen Verlauf des über einen Torsionsschwingungsdämpfer 10 zu übertragenden Drehmoments M anhand der mehrere Oszillationsbereiche aufweisenden und selbstverständlich nur prinzipiell den Drehmomentenverlauf darstellenden Kurve D. Man erkennt, dass im Wesentlichen über den ganzen Zeitverlauf hinweg die beiden Dämpfereinheiten 46 und 48 jeweils zusammenwirken, also die zweite Dämpfereinheit 48 permanent zugeschaltet ist. Dies führt dazu, dass zu jedem Zeitbereich eine Gesamtkennlinie G wirksam ist, die zusammengesetzt ist aus der Kennlinie K₁ im jeweiligen Drehmomenten- bzw. Relativdrehwinkelbereich und der zu überlagernden Kennlinie K_{3b}.

Steigt bei derartiger Wirksamkeit das zu übertragende Drehmoment derart stark an, dass der obere Endbereich jeweils eines der Bereiche B bzw. der dort vorhandenen Gesamtkennlinie G erreicht wird, so kann die erste Klemmanordnung 74 zumindest geringfügig gelöst werden. Die Folge davon ist, dass einerseits die zweite Dämpfereinheit 48 sich entspannen kann, während andererseits ein größerer Drehmomentenanteil von der ersten Dämpfereinheit 46 übernommen wird. Wird daraufhin die erste Klemmanordnung 74 wieder in ihren Schließzustand gebracht, so kann erneut, jedoch bei erhöhtem zu übertragenden Drehmoment in einem der Bereiche B gearbeitet werden. Dabei werden auch unter Berücksichtigung der Sensorsignale der Sensoren 100, 102 jeweils die Mittenbereiche Mi dieser Bereiche B, die in Fig. 14 durch vertikale Linien gekennzeichnet sind, so gelegt, dass sie bei möglicherweise auftretenden Drehmomentschwankungen dann die Mitte des Schwankungsbereichs im Wesentlichen wiedergeben, so dass in beiden Richtungen dann ohne weitere Verschiebung eines Bereichs B gearbeitet werden kann. Auf diese Art und Weise wird es möglich, dass im Wesentlichen über die gesamte Zeit hinweg und auch im gesamten Bereich der zu übertragenden Drehmomente durch Parallelwirkung der beiden Dämpfereinheiten 46, 48 ein in der Höhe jeweils an die zu übertragenden Drehmomente angepasster Kennlinienbereich genutzt werden kann, der jedoch sehr flach ist, also eine geringe Steifigkeit repräsentiert. Dies ermöglicht es, grundsätzlich die Kennlinie K₁ mit geringerer Steigung auszugestalten, als dies bei alleiniger Wirksamkeit der ersten Dämpfereinheit 46 der Fall wäre, da immer, also im gesamten Wirkungsbereich ein zusätzlicher Drehmoment-übertragungsanteil durch die zweite Dämpfereinheit bereitgestellt wird.

In den Fig. 10a) und 10b) ist eine alternative Ausgestaltungsform einer Tellerfederbaugruppe 66a dargestellt. Man erkennt wieder die beiden Teile 104a, 106a. Das erste Teil 104a weist radial außen einen Abstützbereich 116a auf, an dem die Tellerfeder 112a radial außen abgestützt ist. In seinem radial inneren Bereich weist das erste Teil 104a einen Vorspannhaltebereich 118a auf, welcher dafür sorgt, dass die Tellerfeder 112a in einem gewünschten Ausmaß vorgespannt gehalten ist. Das zweite Teil 106a liegt radial innerhalb des ersten Teils 104a und belastet mit seinem Abstützbereich 122a die Tellerfeder 112a radial innen. Der belastete Zustand ist in Fig. 10b) dargestellt.

In Fig. 11 erkennt man eine Weiterbildung dieser Ausgestaltungsform. Dabei sind in dem ersten Teil 104a zwei Tellerfedern 112a, 114a vorgesehen, die stapelartig, also aufeinander aufliegend, angeordnet sind. Es ist selbstverständlich möglich, hier auch mehr als zwei Tellerfedern einzusetzen.

In Fig. 12 ist eine in jeweiligen Federfenstern anzuordnende Gruppe 124a der in den Fig. 10 oder 11 gezeigten Tellerfederbaugruppen 66a erkennbar. Man erkennt, dass jeweils zwei der Tellerfederbaugruppen 66a mit ihren zweiten Teilen 106a gegeneinander gelegt sind, so dass bei einem jeweiligen Paar die Tellerfedern 112a einander entgegengesetzt angeordnet sind.

An den beiden Außenseiten der beiden Paare von Tellerfederbaugruppen 66a sind scheibenartige Beaufschlagungselemente 130a, 132a vorgesehen, welche die jeweils an den Enden der Gruppe 124a liegenden ersten Teile 104a der jeweiligen dort positionierten Tellerfederbaugruppen 66a beaufschlagen. Diese übertragen über ihre Tellerfedern 112a dann die Kraft auf die zweiten Teile 106a und von diesen auf die zweiten Teile 106a der jeweils anderen Tellerfederbaugruppen 66a eines jeweiligen Paares. Diese anderen Tellerfederbaugruppen 66a sind über ihre ersten Teile 104a an einem ringartigen Übertragungselement 134a abgestützt. Somit wird durch Belastung der beiden Beaufschlagungselemente 130a, 132a eine Verformung der vier Tellerfedern 112a erreicht, so dass wieder ein deutlich vergrößerter Gesamtfederweg realisierbar ist.

Es ist selbstverständlich, dass auch bei dieser Ausgestaltungsform, ebenso wie bei der in den Fig. 3 bis 6 gezeigten Ausgestaltungsform die Anzahl der in einer jeweiligen Gruppe 124a bzw. 124 vorzusehenden Tellerfederbaugruppen 66a bzw. 66 beliebig variierbar ist.

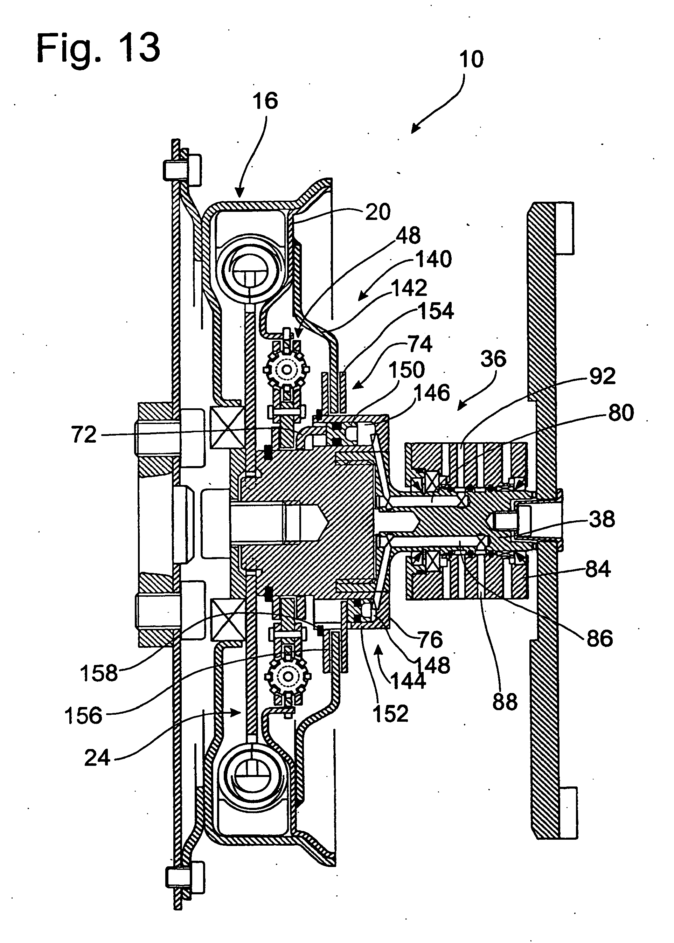

In Fig. 13 ist eine Weiterbildung des in Fig. 1 gezeigten Torsionsschwingungsdämpfers 10 gezeigt. Dieser in Fig. 13 gezeigte Torsionsschwingungsdämpfer entspricht grundsätzlich dem vorangehend mit Bezug auf die Fig. 1 beschriebenen, so dass auf die diesbezüglichen Ausführungen verwiesen werden kann. Der Torsionsschwingungsdämpfer 10 der Fig. 13 weist jedoch zusätzlich noch eine Reibeinrichtung 140 auf, die wahlweise zwischen der Primärseite 16 und der Sekundärseite 24 wirken kann. Die Reibeinrichtung 140 weist eine mit der Primärseite, insbesondere dem Deckscheibenelement 20, verbundene Reibscheibe 142 auf, die durch eine an der Sekundärseite 24 vorgesehene zweite Klemmanordnung 144 klemmbar und somit auch mit der Sekundärseite 24 reibmäßig koppelbar ist. Bei dieser Ausgestaltungsform ist der Ringzylinder 76 nicht als in Umfangsrichtung durchlaufender Zylinder ausgebildet, sondern weist eine Mehrzahl von in Umfangsrichtung aufeinander folgend angeordneten Zylinderkammern 146, 148 auf. In den Zylinderkammern 146 sind Kolben 150 verschiebbar aufgenommen, während in den Zylinderkammern 148 Kolben 152 verschiebbar aufgenommen sind. Die Anordnung kann beispielsweise derart sein, dass die Zylinderkammern 146 und 148 einander abwechselnd vorgesehen sind. Die Kolben 150 der Zylinderkammern 146, welche in ihrer Gesamtheit also im Wesentlichen die erste Klemmanordnung 74 bereitstellen, beaufschalgen den Klemmring 72 und können somit die zweite Dämpfereinheit 48 aktivieren bzw. bei Freigabe der Beaufschlagung deaktivieren. Die Kolben 152 der zweiten Klemmanordnung 144 beaufschlagen einen weiteren Klemmring 154, um diesen in Richtung auf einen weiteren Widerlagerring 156 zu zubewegen. Dieser weitere Widerlagerring 156 ist beispielsweise durch einen Sicherungsring 158 an der Außenseite des Ringzylinders 76 axial arretiert. Bei Verschiebung des Klemmrings 154 auf den Widerlagerring 156 zu wird die Reibscheibe 142 mit ihrem radial inneren Bereich zwischen den beiden Ringen 156, 154 geklemmt und somit eine Reibwirkung erzeugt. Je nach Ausmaß der Druckerhöhung in den Zylinderkammern 148 ist die Stärke der Reibwirkung variierbar, wodurch ein elementarer Einfluss auf die Schwingungsenergieabfuhr und mithin das Dämpfungsverhalten des Torsionsschwingungsdämpfers 10 genommen werden kann. Wie man dem Diagramm der Fig. 2 entnehmen kann, wirkt die Reibeinrichtung 140 sowohl parallel zur ersten Dämpfereinheit 46, als auch parallel zur zweiten Dämpfereinheit 48 und kann unabhängig davon aktiviert bzw. deaktiviert werden, ob auch die zweite Dämpfereinheit 48 aktiv ist.

Die Versorgung der Zylinderkammern 146, 148 mit dem Druckfluid erfolgt über die Drehdurchführung 36. Dabei können beispielsweise die Zylinderkammern 146 über den Kanal 80 im zweiten Rotorteil 38 und den Kanal 92 im nicht rotierenden Teil 84 der Drehdurchführung 36 versorgt werden, während die Zylinderkammern 148 über den Kanal 86 im zweiten Rotorteil 38 und den Kanal 88 im nicht rotierenden Teil 84 versorgt werden können.

Durch die Ausgestaltung, insbesondere der ersten Klemmanordnung 74, nach Art einer Reibungskupplung wird es nicht nur möglich, die zweite Dämpfereinheit 48 wahlweise zuzuschalten bzw. abzuschalten, sondern der Zuschaltvorgang bzw. Abschaltvorgang kann in gesteuerter bzw. geregelter Art und Weise so erfolgen, dass kein schlagartiges Zuschalten bzw. Abschalten der zweiten Dämpfereinheit 48 auftitt, sondern insbesondere beim Abschalten durch allmähliches Absenken der Einspannkraft für den zweiten Ankopplungsbereich 60 ein Entspannungsschlag der Tellerfedereinheiten 66 bzw. 66a vermieden werden kann. Das Zu- und Abschalten der zweiten Dämpfereinheit 48 und auch der Reibeinrichtung 140 kann, wie vorangehend bereits dargelegt, unter Berücksichtigung der von den Sensoren 100 und 102 gelieferten Signale erfolgen, welche letztendlich die Relativbewegung und den Relativdrehzustand zwischen der Primärseite 16 und der Sekundärseite 24 charakterisieren. Weiter ist es selbstverständlich möglich, durch die Ankopplung der Ansteuervorrichtung 98 an einen CAN-Bus eines Fahrzeugs Information über den allgemeinen Fahrzustand, insbesondere auch über die Gaspedalbetätigung zu erlagen, um frühzeitig Kenntnis über kommende Drehmomentenänderungen zu erhalten. Auf diese Art und Weise kann bereits antizipierend für eine Aktivierung der zweiten Dämpfereinheit 48 oder/und der Reibeinrichtung 140 gesorgt werden.

Weiter sei darauf hingewiesen, dass insbesondere die erste Dämpfereinheit 46 auch in anderer Art und Weise ausgeführt sein kann, wobei beispielsweise hinsichtlich der Auswahl und Anordnung der Schraubenfedern 50 große Variationsfreiheit besteht. Grundsätzlich kann die erste Dämpfereinheit 46 auch mit einer Mehrzahl von Gasfedern arbeiten, die jeweils ein komprimierbares Gasvolumen ausweisen, das durch ein in Verdrängungskammern enthaltenes inkompressibles Fluid belastet wird, wenn die Primärseite 16 und die Sekundäreseite 24 sich bezüglich einander verdrehen.

## Patentansprüche

1. Torsionsschwingungsdämpfer, umfassend eine Primärseite (16) und eine gegen die Wirkung einer Dämpferanordnung (44) ausgehend von einer Neutral-Relativdrehlage um eine Drehachse (A) bezüglich der Primärseite (16) drehbare Sekundärseite (24), wobei die Dämpferanordnung (44) umfasst:
- eine im Wesentlichen im gesamten Relativdrehwinkelbereich zwischen der Primärseite (16) und der Sekundärseite (24) wirksame erste Dämpfereinheit (46) mit progressiver Dämpferkennlinie (K₁),
- eine zweite Dämpfereinheit (48) mit wenigstens bereichsweise degressiver Dämpferkennlinie (K_{3b}), wobei die zweite Dämpfereinheit (48) wahlweise in den Drehmomentübertragungsweg zwischen der Primärseite (16) und der Sekundärseite (24) zuschaltbar und abschaltbar ist und im Zuschaltzustand parallel zur ersten Dämpfereinheit (46) wirkt,
- wobei die zweite Dämpfereinheit (48) wenigstens eine bei Relativdrehung der Primärseite (16) bezüglich der Sekundärseite (24) in Richtung von der Neutral-Relativdrehlage weg verformbare Tellerfeder (112, 114; 112a, 114a) umfasst,
**dadurch gekennzeichnet,**
- **dass** die zweite Dämpfereinheit (48) wenigstens eine Tellerfederbaugruppe (66; 66a) mit einem wenigstens eine Tellerfeder (112, 114; 112a, 114a) belastenden ersten Teil (104; 104a) und die wenigstens eine Tellerfeder (112, 114; 112a, 114a) belastenden zweiten Teil (106; 106a) umfasst, wobei die wenigstens eine Tellerfeder (112, 114; 112a, 114a) an dem ersten Teil (104; 104a) oder dem zweiten Teil (106; 106a) vorgespannt gehalten ist, und
- **dass** die wenigstens eine Tellerfeder (112, 114; 112a, 114a) an dem einen Teil (104; 104a) von erstem Teil (104; 104a) und zweitem Teil (106; 106a) derart vorgespannt gehalten ist, dass eine ausgehend von dem Vorspannzustand weitergehende Belastung der wenigstens einen Tellerfeder (112, 114; 112a, 114a) zu einer verminderten Reaktionskraft der wenigstens einen Tellerfeder (112, 114; 112a, 114a) führt.

2. Torsionsschwingungsdämpfer nach Anspruch 1,
**dadurch gekennzeichnet, dass** die wenigstens eine Tellerfederbaugruppe (66; 66a) wenigstens zwei vorgespannt gehaltene Tellerfedern (112, 114; 112a, 114a) umfasst.

3. Torsionsschwingungsdämpfer nach einem der Ansprüche 1 oder 2,
**dadurch gekennzeichnet, dass** das erste Teil (104a) die wenigstens eine Tellerfeder (112a, 114a) radial außen belastet und das zweite Teil (106a) die wenigstens eine Tellerfeder (112a, 114a) radial innen belastet.

4. Torsionsschwingungsdämpfer nach einem der Ansprüche 1 bis 3,
**dadurch gekennzeichnet, dass** das erste Teil (104) wenigstens eine erste Tellerfeder (112) radial außen belastet, dass das zweite Teil (106) wenigstens eine zweite Tellerfeder (114) radial außen belastet und dass die wenigstens eine erste Tellerfeder (112) und die wenigstens eine zweite Tellerfeder (114) radial innen bezüglich einander abgestützt sind.

5. Torsionsschwingungsdämpfer nach einem der Ansprüche 1 bis 4,
**dadurch gekennzeichnet, dass** die zweite Dämpfereinheit (48) wenigstens eine Gruppe (124; 124) von seriell wirkenden Tellerfederbaugruppen (66; 66a) umfasst.

6. Torsionsschwingungsdämpfer nach einem der Ansprüche 1 bis 5, bei welchem die zweite Dämpfereinheit (48) einen mit einer Seite von Primärseite (16) und Sekundärseite (24) im Wesentlichen drehfest gekoppelten ersten Ankopplungsbereich (54) aufweist und einen mit der anderen Seite von Primärseite (16) und Sekundärseite (24) wahlweise in Drehmomentübertragungskopplung bringbaren zweiten Ankopplungsbereich (60) umfasst, und bei welchem dem zweiten Ankopplungsbereich (60) eine erste Klemmanordnung (74) an der anderen Seite von Primärseite (16) und Sekundärseite (24) zugeordnet ist, wobei durch die erste Klemmanordnung (74) die Drehmomentübertragungskopplung herstellbar und aufhebbar ist, **dadurch gekennzeichnet, dass** die erste Klemmanordnung (74) wenigstens ein durch Druckfluidbeaufschlagung zur Herstellung/Aufhebung der Drehmomentübertragungskopplung verlagerbares erstes Klemmorgan (72) umfasst.

7. Torsionsschwingungsdämpfer nach einem der Ansprüche 1 bis 6, bei welchem eine wahlweise aktivierbare und deaktivierbare Reibeinrichtung (140) zur Erzeugung einer Reibwirkung zwischen der Primärseite (16) und der Sekundärseite (24) vorgesehen ist,
**dadurch gekennzeichnet, dass** der Reibeinrichtung (140) eine zweite Klemmanordnung (144) mit wenigstens einem durch Druckfluidbeaufschlagung zur Herstellung/Aufhebung der Reibwirkung verlagerbaren zweiten Klemmorgan (154) zugeordnet ist.

8. Torsionsschwingungsdämpfer nach Anspruch 6 und 7,
**dadurch gekennzeichnet, dass** die zweite Klemmanordnung (144) an der anderen Seite von Primärseite (16) und Sekundärseite (24) vorgesehen ist.

9. Torsionsschwingungsdämpfer nach Anspruch 6 und 8,
**dadurch gekennzeichnet, dass** der anderen Seite von Primärseite (16) und Sekundärseite (24) eine Drehdurchführung (36) zur Zufuhr/Abfuhr von Druckfluid zugeordnet ist.

## Claims

1. Torsional vibration damper, comprising a primary side (16) and a secondary side (24) rotatable about an axis of rotation (A) with respect to the primary side (16), counter to the action of a damper arrangement (44), from a neutral relative rotary position, the damper arrangement (44) comprising:
- a first damper unit (46) active essentially in the entire relative rotary angle range between the primary side (16) and the secondary side (24) and having a progressive damper characteristic curve, (K₁),
- a second damper unit (48) having a damper characteristic curve (K_{3b}) decreasing at least in regions, the second damper unit (48) being capable of being selectively cut into and cut out of the torque transfer path between the primary side (16) and the secondary side (24) and, in the cut-in state, acting parallel to the first damper unit (46),
- the second damper unit (48) comprising at least one cup spring (112, 114; 112a, 114a) deformable away from the neutral relative rotary position in the event of the relative rotation of the primary side (16) with respect to the secondary side (24),
**characterized**
- **in that** the second damper unit (48) comprises at least one cup spring subassembly (66; 66a) with a first part (104; 104a) loading at least one cup spring (112, 114; 112a, 114a) and with the second part (106; 106a) loading at least one cup spring (112, 114; 112a, 114a), the at least one cup spring (112, 114; 112a, 114a) being held, prestressed, on the first part (104; 104a) or the second part (106; 106a), and
- **in that** the at least one cup spring (112, 114; 112a, 114a) is held, prestressed, on the one part (104; 104a) of the first part (104; 104a) and second part (106; 106a) in such a way that loading of the at least one cup spring (112, 114; 112a, 114a) which exceeds the prestressed state leads to a reduced reaction force of the at least one cup spring (112, 114; 112a, 114a).

2. Torsional vibration damper according to Claim 1, **characterized in that** the at least one cup spring subassembly (66; 66a) comprises at least two cup springs (112, 114; 112a, 114a) held, prestressed.

3. Torsional vibration damper according to either one of Claims 1 and 2, **characterized in that** the first part (104a) loads the at least one cup spring (112a, 114a) radially on the outside and the second part (106a) loads the at least one cup spring (112a, 114a) radially on the inside.

4. Torsional vibration damper according to one of Claims 1 to 3, **characterized in that** the first part (104) loads at least one first cup spring (112) radially on the outside, **in that** the second part (106) loads at least one second cup spring (114) radially on the outside, and **in that** the at least one first cup spring (112) and the at least one second cup spring (114) are supported with respect to one another radially on the inside.

5. Torsional vibration damper according to one of Claims 1 to 4, **characterized in that** the second damper unit (48) comprises at least one group (124; 124) of cup spring subassemblies (66; 66a) acting in series.

6. Torsional vibration damper according to one of Claims 1 to 5, in which the second damper unit (48) has a first coupling region (54) coupled essentially fixedly in terms of rotation to one side of the primary side (16) and secondary side (24) and a second coupling region (60) capable of being brought selectively into torque transfer coupling with the other side of the primary side (16) and secondary side (24), and in which the second coupling region (60) is assigned a first clamping arrangement (74) on the other side of the primary side (16) and secondary side (24), the torque transfer coupling being capable of being made and of being cancelled by means of the first clamping arrangement (74), **characterized in that** the first clamping arrangement (74) comprises at least one first clamping member (72) displaceable by the action of pressure fluid for the purpose of making/cancelling the torque transfer coupling.

7. Torsional vibration damper according to one of Claims 1 to 6, in which a selectively activatable and deactivatable friction device (140) is provided for generating frictional action between the primary side (16) and the secondary side (24), **characterized in that** the friction device (140) is assigned a second clamping arrangement (144) with at least one second clamping member (154) displaceable by the action of pressure fluid for the purpose of making/cancelling the frictional action.

8. Torsional vibration damper according to Claims 6 and 7, **characterized in that** the second clamping arrangement (144) is provided on the other side of the primary side (16) and secondary side (24).

9. Torsional vibration damper according to Claims 6 and 8, **characterized in that** the other side of the primary side (16) and secondary side (24) is assigned a rotary leadthrough (36) for the supply/discharge of pressure fluid.

## Revendications

1. Amortisseur d'oscillations de torsion, comprenant un côté primaire (16) et un côté secondaire (24) pouvant tourner à l'encontre de l'action d'un agencement d'amortisseur (44) à partir d'une position de rotation relative neutre autour d'un axe de rotation (A) par rapport au côté primaire (16), l'agencement d'amortisseur (44) comprenant :
- une première unité d'amortisseur (46) agissant essentiellement dans toute la région angulaire de rotation relative entre le côté primaire (16) et le côté secondaire (24), avec une caractéristique d'amortissement progressive (K₁),
- une deuxième unité d'amortisseur (48) avec une caractéristique d'amortissement dégressive (K_{3b}) au moins dans certaines parties, la deuxième unité d'amortisseur (48) pouvant être commutée en marche ou à l'arrêt de manière sélective dans la voie de transfert de couple entre le côté primaire (16) et le côté secondaire (24) et agissant dans l'état commuté en marche parallèlement à la première unité d'amortisseur (46),
- la deuxième unité d'amortisseur (48) comprenant au moins un ressort Belleville (112, 114 ; 112a, 114a) déformable dans la direction s'écartant de la position de rotation relative neutre lors de la rotation relative du côté primaire (16) par rapport au côté secondaire (24),
**caractérisé en ce que**
- la deuxième unité d'amortisseur (48) comprend au moins un module de ressort Belleville (66 ; 66a) avec une première partie (104 ; 104a) sollicitant au moins un ressort Belleville (112, 114 ; 112a, 114a) et une deuxième partie (106 ; 106a) sollicitant au moins un ressort Belleville (112, 114 ; 112a, 114a), l'au moins un ressort Belleville (112, 114 ; 112a, 114a) étant maintenu de manière précontrainte sur la première partie (104 ; 104a) ou la deuxième partie (106 ; 106a), et
- l'au moins un ressort Belleville (112, 114 ; 112a, 114a) est maintenu sur ladite une partie (104 ; 104a) de manière précontrainte par la première partie (104 ; 104a) et la deuxième partie (106 ; 106a), de telle sorte qu'une contrainte de l'au moins un ressort Belleville (112, 114 ; 112a, 114a) se poursuivant depuis l'état de précontrainte conduise à une force de réaction réduite de l'au moins un ressort Belleville (112, 114 ; 112a, 114a).

2. Amortisseur d'oscillations de torsion selon la revendication 1,
**caractérisé en ce que** l'au moins un module de ressort Belleville (66 ; 66a) comprend au moins deux ressorts Belleville (112, 114 ; 112a, 114a) maintenus de manière précontrainte.

3. Amortisseur d'oscillations de torsion selon la revendication 1 ou 2,
**caractérisé en ce que** la première partie (104a) sollicite l'au moins un ressort Belleville (112a, 114a) radialement vers l'extérieur et la deuxième partie (106a) sollicite l'au moins un ressort Belleville (112a, 114a) radialement vers l'intérieur.

4. Amortisseur d'oscillations de torsion selon l'une quelconque des revendications 1 à 3,
**caractérisé en ce que** la première partie (104) sollicite au moins un premier ressort Belleville (112) radialement vers l'extérieur, **en ce que** la deuxième partie (106) sollicite au moins un deuxième ressort Belleville (114) radialement vers l'extérieur et **en ce que** l'au moins un premier ressort Belleville (112) et l'au moins un deuxième ressort Belleville (114) sont supportés radialement à l'intérieur l'un par rapport à l'autre.

5. Amortisseur d'oscillations de torsion selon l'une quelconque des revendications 1 à 4,
**caractérisé en ce que** la deuxième unité d'amortisseur (48) comprend au moins un groupe (124 ; 124) de modules de ressort Belleville (66 ; 66a) agissant en série.

6. Amortisseur d'oscillations de torsion selon l'une quelconque des revendications 1 à 5, dans lequel la deuxième unité d'amortisseur (48) présente une première région d'accouplement (54) accouplée de manière sensiblement solidaire en rotation à un côté du côté primaire (16) et du côté secondaire (24), et une deuxième région d'accouplement (60) pouvant être amenée de manière sélective dans un accouplement de transfert de couple avec l'autre côté du côté primaire (16) et du côté secondaire (24), et dans lequel un premier agencement de serrage (74) de l'autre côté du côté primaire (16) et du côté secondaire (24) est associé à la deuxième région d'accouplement (60), l'accouplement de transfert de couple pouvant être établi et supprimé par le premier agencement de serrage (74),
**caractérisé en ce que** le premier agencement de serrage (74) comprend au moins un premier organe de serrage (72) pouvant être déplacé par sollicitation par fluide sous pression en vue de l'établissement/de la suppression de l'accouplement de transfert de couple.

7. Amortisseur d'oscillations de torsion selon l'une quelconque des revendications 1 à 6, dans lequel un dispositif de friction (140) pouvant être activé et désactivé de manière sélective est prévu pour produire un effet de friction entre le côté primaire (16) et le côté secondaire (24), **caractérisé en ce que** le dispositif de friction (140) est associé à un deuxième agencement de serrage (144) avec au moins un deuxième organe de serrage (154) déplaçable par sollicitation par fluide sous pression pour établir/supprimer l'effet de friction.

8. Amortisseur d'oscillations de torsion selon la revendication 6 et 7,
**caractérisé en ce que** le deuxième agencement de serrage (144) est prévu sur l'autre côté du côté primaire (16) et du côté secondaire (24).

9. Amortisseur d'oscillations de torsion selon les revendications 6 et 8,
**caractérisé en ce que** l'autre côté du côté primaire (16) et du côté secondaire (24) est associé à un passage rotatif (36) pour l'alimentation/l'évacuation de fluide sous pression.
